# EUROPEAN PATENT APPLICATION

(11) **EP 1 235 026 A1**
(43) Date of publication of application: **28.08.2002**
(21) Application number: 01500050.8
(22) Date of filing: 27.02.2001
(51) Int. Cl.: F17C 13/08, F17C 7/00, F17C 13/04, F16K 31/46

(54) **Security device for discharge of gas cylinder**

(71) Applicant: Gil, Paco Martinez, 44566 Las Parras de Castellote, Teruel (ES)
(72) Inventor: Gil, Paco Martinez, 44566 Las Parras de Castellote, Teruel (ES)

(57) **Abstract**

SEGURIGAS. It consists on an apparatus of security that goes installed in the regulator of gas, with a switch that goes installed in the kitchen (1). The objective consists in that people are never left the open gas. The device consists of a switch of open and closed, so that the user knows from any point of the kitchen if the gas is open or closed.

It consists of two parts. One that goes hooked with a band (3) to the regulator of gas that is the apparatus 2. By means of some towlines (5) the movement is transmitted from the lever (4) to the switch (1); when the lever (4) is moved, it will also be moved the system of pulleys that has the apparatus 1 and 2, and in this way the switch that takes the regulator of gas will be open up or closed.

## Description

### Sector of the technique

It is an apparatus for all the users of the gas butane cylinder, used in the home, and thanks to this apparatus the user the regulator of gas will never be left open, as well as when opening the gas the user won't have to throw of the drawer and to bend over to connect it. This apparatus is devised for forgetful people and ageing people that can hardly bend over stops.

### Antecedents of the invention

Any similar apparatus is not known, based on this technique.

### Description of the invention

Segurigas, as the name indicates it is an apparatus of security for the gas. This apparatus goes hooked in the regulator of gas with a kind of a band that is divided in two for their best installation. The band takes rubber protection in its interior part, it stops this way not to damage the regulator of gas. This band anger screwed in the half part of the regulator of gas to balance the weight of the apparatus better, the band will have the form of the regulator of gas that is deformed for one on its behalves (for where it leaves the hose of gas butane).

For the low part between the band and the driver apparatus of the regulator a very long screw that, giving turns to the thread that it has, makes that it supports in the high part of the butane bottle, it stops this way to balance the weight of the Segurigas and makes that the regulator of gas is not damaged. The screw, in their part that it supports in the butane bottle, is protected by rubber for not damaging the butane bottle.

Inside the apparatus there is a pulley of a certain size; on their central part it leaves a bar bent to half of their journey toward a side and then some centimetres later bent toward another side, creating in this way an angle of curved movement, and in their end there is a kind of a fixed clip with the size of the width of the switch of gas. The pulley takes screwed two towlines one for the part of up of the pulley and another for the low part of the pulley, united in the same screw of the pulley.

The two towlines come out for the lateral part of the apparatus, where there are two screws with hollow threads, for if it is necessary to tighten or to come loose the towlines. The separation of the screws with thread to tighten or to come loose will be of the diameter of the pulley.

The towlines for the external part of the apparatus will go lined for their best slip, security and operation. These will have an enough longitude for their installation, it depends on the user it is recommended among a meter to two meters.

The towlines arrive to the general switch entering for a lateral with two screws with thread holes, to tighten or to come loose the towlines, the separation of the screws with thread will be of the diameter of the pulley that also takes inside the general switch. A towline enters for the high part of the pulley and another for the low part of the pulley, uniting in the same part where they will be screwed. The pulley has a lever that comes out outside of the box of the pulley and that will works as switch. The size of the pulley of the switch is much bigger that the pulley that is in the apparatus that goes hooked in the regulator of gas, so that giving a fourth part of the turn in the switch, the apparatus, that goes hooked in the regulator of gas, could do a half turn and, in this way, open up or close the switch of the regulator of gas. The two pulleys have in their lateral ones some small edges so that you doesn't come out the towline of the pulley. The box where the pulley of the switch is, have three external holes, two in the sides and one under in order to be screwed to the wall of the kitchen. The switch as well as the apparatus that goes hooked in the regulator of gas have some front lids that can be unscrewed for inspection of the pulleys and the towlines that are inside.

The towlines will have to go anointed with fat for their best slip. It will be important that the towlines never make abrupt turns in their trajectory for their best slip inside of the lining.

### Brief description of the drawings

The carried out drawings have under the number of the figure the scale at which have been carried out the drawing.

The brief description of the drawings consists of two pieces united by some lined towlines, one that is the switch and the other one the apparatus that works to the regulator.

The apparatus that works goes hooked in the regulator of gas that will be the one that will open up and will close the lever of the regulator of gas, and what will work this system will be the switch that will go outside of the drawer of the cylinder of gas, with two positions, one of open and another of closed.

The drawings that are made:
FIGURE 1:
   External sight of the apparatus that goes hooked in the regulator of gas.
FIGURE 1A:
   Interior sight of the apparatus that goes hooked in the regulator of gas.
FIGURE 1B:
   Interior sight of the apparatus that goes hooked in the regulator of gas, specifying pieces. Interior sight of the apparatus that goes hooked in the regulator of gas, specifying pieces.
FIGURE 2:
   External sight of the switch.
FIGURE 2A:
   Interior sight of the switch.
FIGURE 2B:
   Interior sight of the switch, specifying pieces.
FIGURE 3:
   Sight of the apparatus hooked to the old regulator of gas, more used by the population.
FIGURE 4:
   Sight of the whole invention installed in a kitchen.
FIGURE 5:
   Pieces of the pulleys indicating the hook system and screwed of the towlines.
FIGURE 6:
   Sight of the Segurigas being coupled to the last regulator of gas that Repsol had taken out.

### A way of favourite realization.

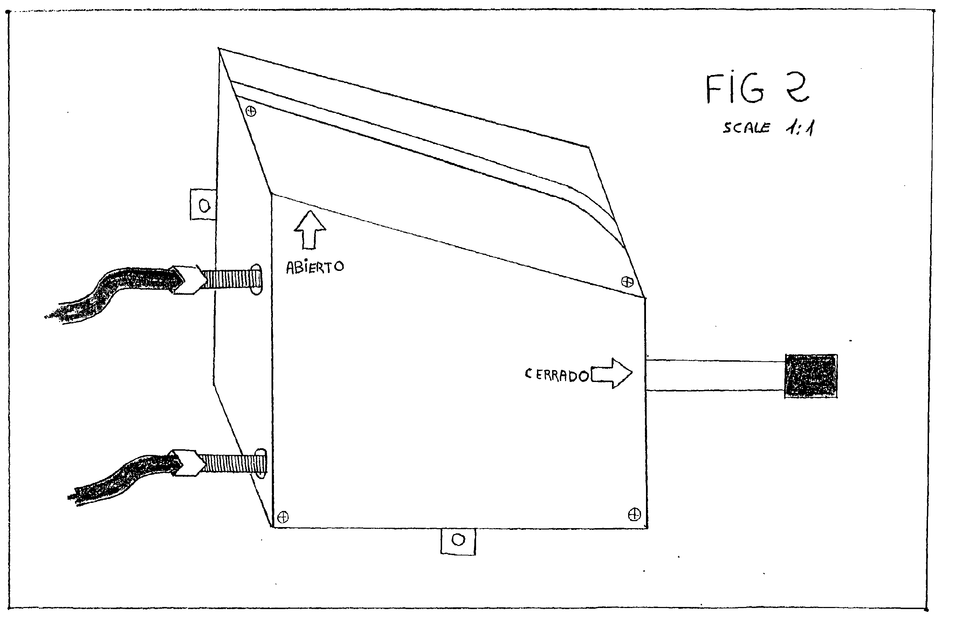

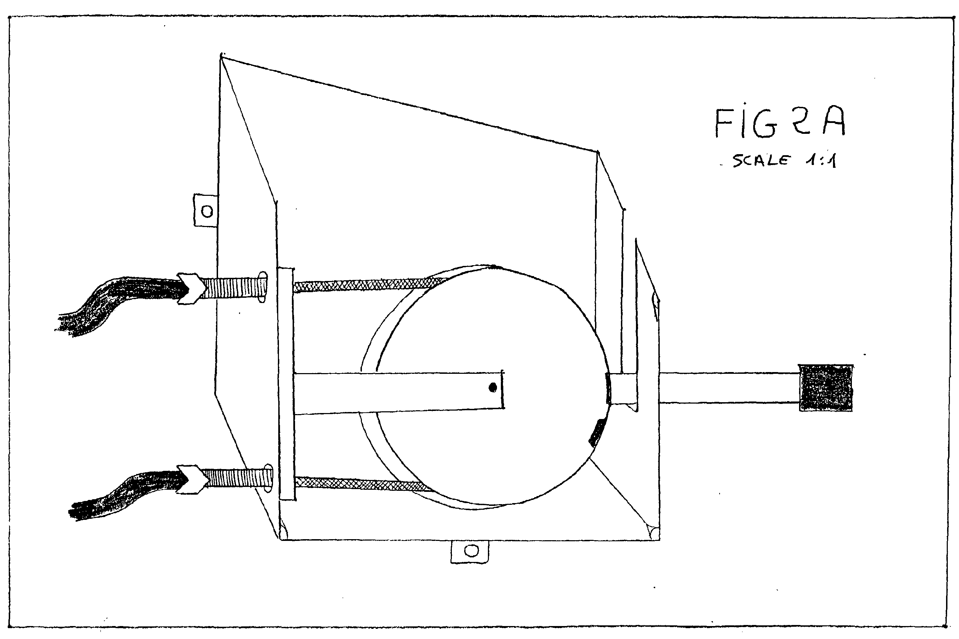

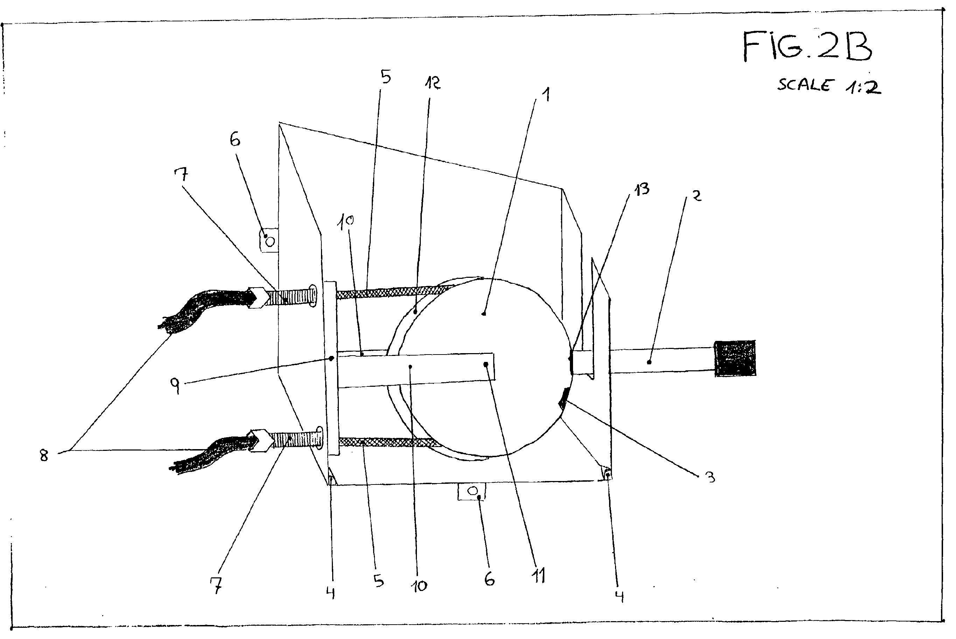

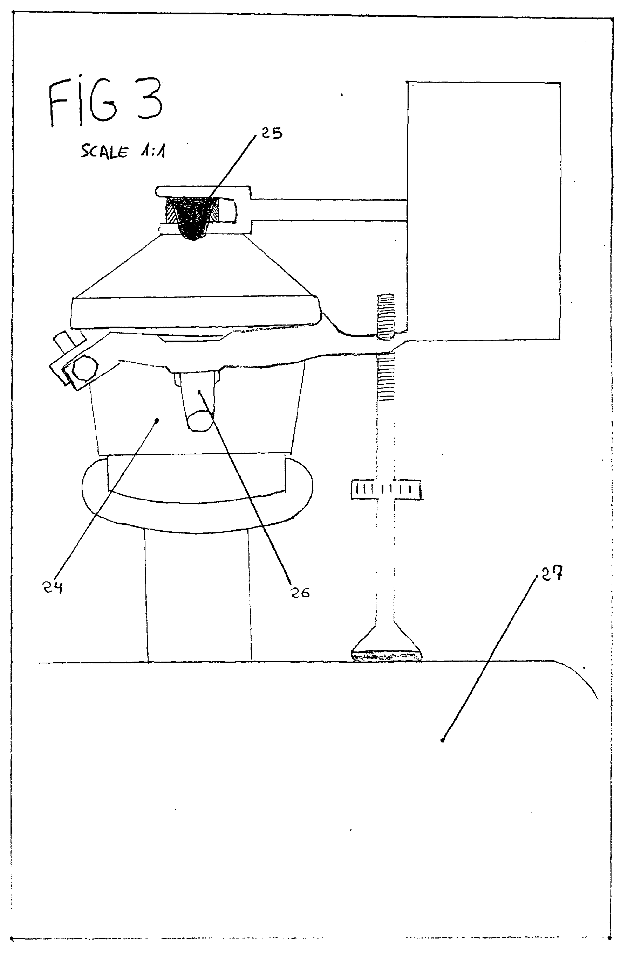

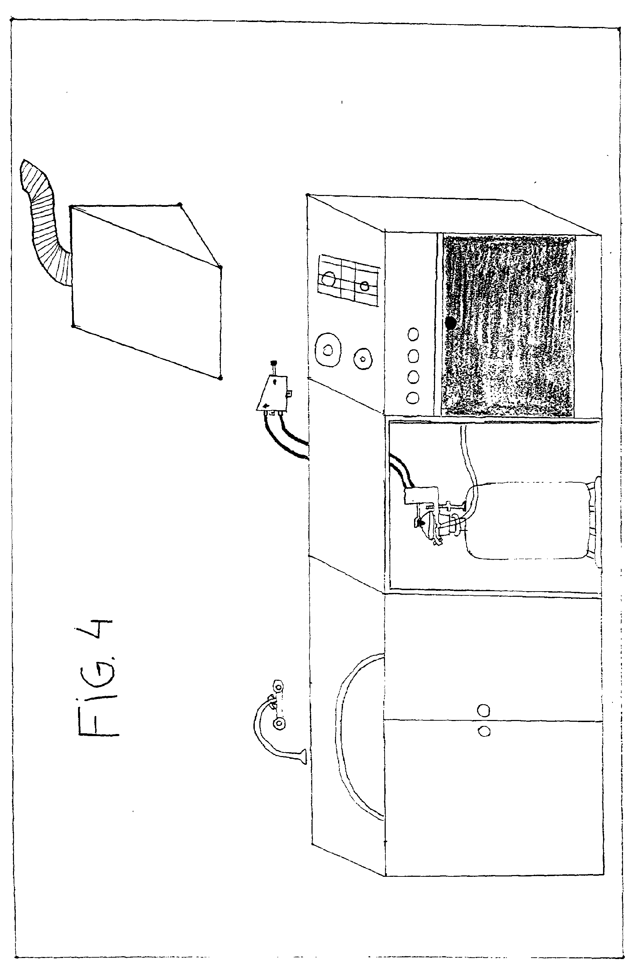

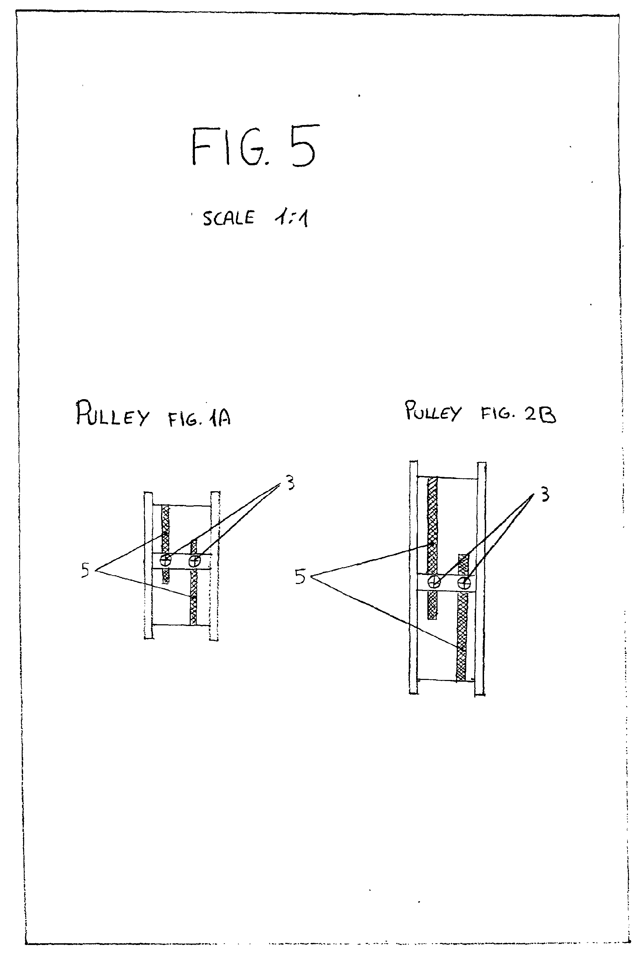

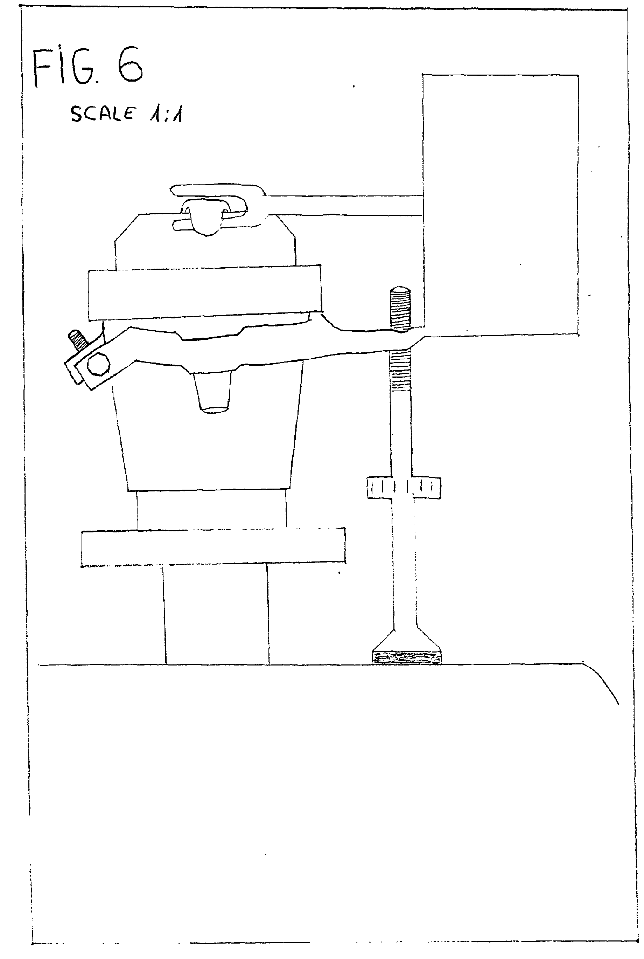

The Segurigas in question consists of two pieces united by two lined towlines. The distance of the towlines should have as maximum two meters so that the switch (FIG. 2) doesn't go very hard when working it.

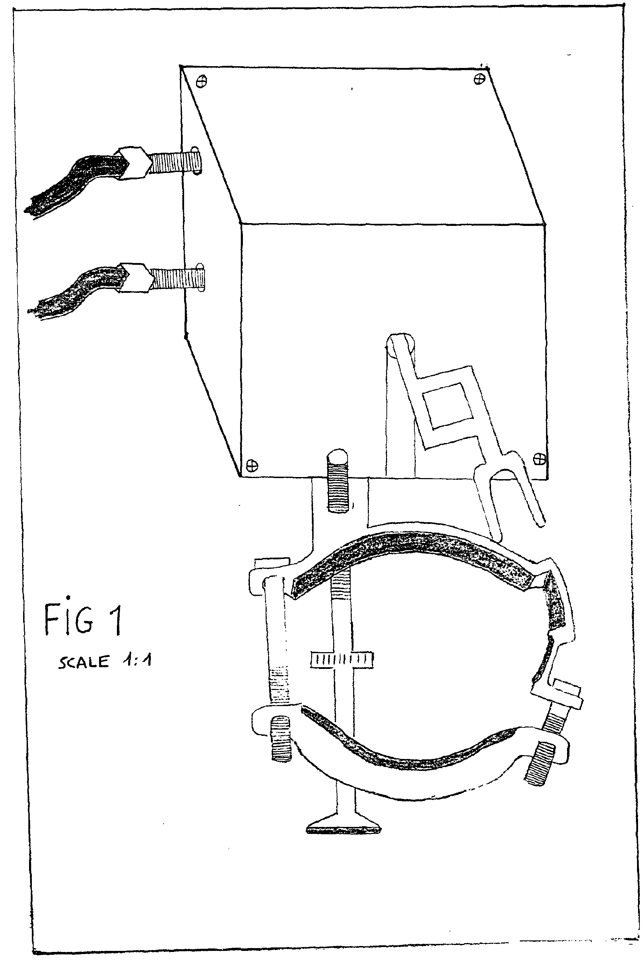

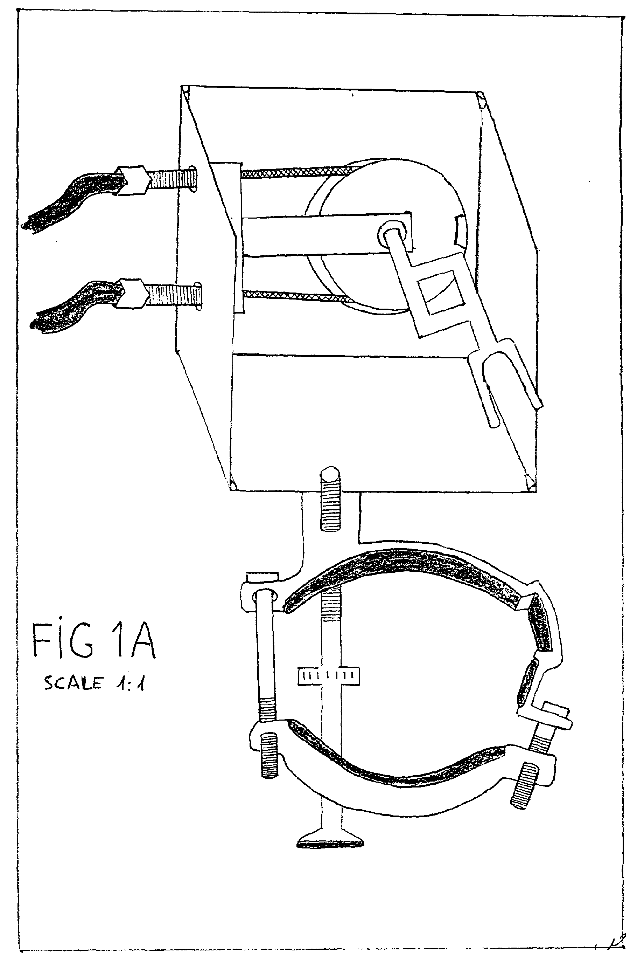

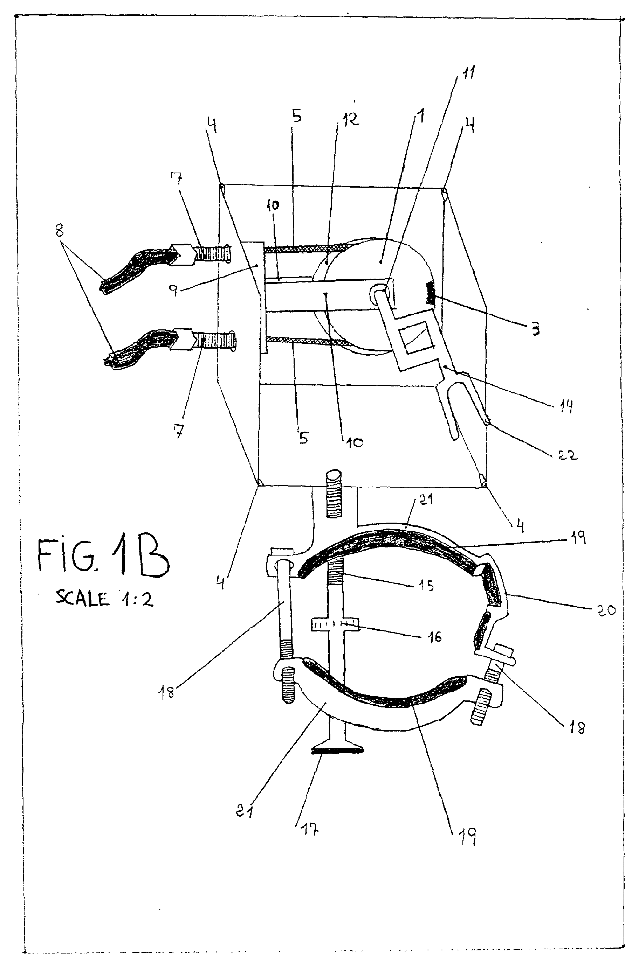

The materials can be made of hard plastic or aluminium, always respecting the weight: against less weight (FIG. 1) better for the regulator of gas. The rubber protection are essential for not damaging neither the regulator of gas neither the gas cylinder.

The dimensions of the apparatuses can be: the more smaller the figure 1 is, the more better, but the figure 2 has to be of a considerable size so that the switch is seen if it is open or closed at first sight and from a distance.

The lever of the switch has to be big and of an attractive colour so that it is seen very from a distance.

The form of the switch outwardly can change for more beauty of the kitchen, but never inwardly for the specific size of the pulley.

The best colour is the white as the electrical appliances, but it can be made of any colour.

### Industrial application

The Segurigas is susceptible of industrial application because it can be manufactured easily in chain, and then to be distributed to the trade where they would be sold as any other product; thanks to the easy installation of the apparatus the user would be able to settle it by himself without any problem. But the more secure should be that it were built, distributed and installed by a mulinational corporation, as Repsol Gas, and that it were guaranteed without risk for the user. It would be convenient a revision every four years for specialized technicians and mainly a change of the towlines every four years.

### CLAIMS

### Preamble

Segurigas; the object of the invention is that the user has much more security when using the gas butane; it contains an apparatus hooked to the regulator of gas that will work to open up or to close the regulator of gas that a lot of people leave it open without knowing the danger that bears. This apparatus will work by means of a switch installed in the external part of the drawer of the gas cylinder.

This apparatus will never be electronic for further security because people have panic to the mixture of electricity and gas.

### Characterization Part

The Segurigas consists on many simple elements that next relate in the figures.
FIGURE 1B:

The apparatus 1B will go anchored in the regulator of gas by means of a kind of band (21) divided in two parts for its best installation, on one hand of the band (20)

### Industrial application

The Segurigas is susceptible of industrial application because it can be manufactured easily in chain, and then to be distributed to the trade where they would be sold as any other product; thanks to the easy installation of the apparatus the user would be able to settle it by himself without any problem. But the more secure should be that it were built, distributed and installed by a mulinational corporation, as Repsol Gas, and that it were guaranteed without risk for the user. It would be convenient a revision every four years for specialized technicians and mainly a change of the towlines every four years.

## Claims

**1. Preamble**
Segurigas; the object of the invention is that the user has much more security when using the gas butane; it contains an apparatus hooked to the regulator of gas that will work to open up or to close the regulator of gas that a lot of people leave it open without knowing the danger that bears. This apparatus will work by means of a switch installed in the external part of the drawer of the gas cylinder.
This apparatus will never be electronic for further security because people have panic to the mixture of electricity and gas.
**Characterization Part**
The Segurigas consists on many simple elements that next relate in the figures.
FIGURE 1B:
The apparatus 1B will go anchored in the regulator of gas by means of a kind of band (21) divided in two parts for its best installation, on one hand of the band (20) it will be deformed to be coupled to the regulator of gas by its part where it leaves the gas.
The screws (18) they are to tighten or to come loose the band. The bands in their interior part have some rubbers (19) to protect the regulator of gas when pressing the screws.
A screw (15) leaves of the low part between the band and the apparatus; this screw will support in the high part of the butane bottle that in their low part will be protected by a rubber (17) for not damaging the gas cylinder. The screw will be crowded together or loosened giving turns to the thread toward a side or another (16).
The interior of the apparatus contains a pulley (1) with some edges (12) so that the towlines are not come out (5) that enter for some hollow screws (7); these can be tightened or come loose by means of some threads that there are in the axis (9) of which comes out a double axis (10) that is the one that held the pulley (1).
The two towlines will be screwed in the pulley (1) in the part (3). In the pulley (1) of the central part (2) it leaves a kind of a bent bar (14) that has the clip form in their end (22) that is the one that anger hooked in the switch of the regulator of gas.
The apparatus has some front lids that will be able to open up for the inspection of the elements, these will go screwed (4), the towlines (5) will go lined (8) and well anointed of fat in its interior.
FIGURE 2B:
It is the switch that works the FIG. 1. The apparatus switch 2B, consists of a pulley (1) that has some edges (12) so that the towlines do not come out (5).
In a part of the pulley (1) the towlines will be screwed (5) in the part (3). The towlines (5) enter in the switch for some hollow screws (7) that crowd together and come loose to tighten or come loose the towlines thanks to the threads that it has in the axis (9) from which central part leaves a double axis (10) that is to hold the pulley (1) on its central part (2).
Of a part of the pulley (1) is hooked (13) a lever (2) that makes as switch when moving the pulley (1). The apparatus switch has a lid that is screwed in the part (4), that is for inspection of the elements.
The apparatus is screwed to the wall by means of the external holes (6); in the drawing the external hole of the right side doesn't leave but it is to the same height that that of the left side.
The towlines will go lined (8). The towlines will be covered with fat so that they slip better through the lining. Of the trajectory of the switch to the apparatus driver, the towlines will never make abrupt turns for bigger softness of the group. The towlines in their trajectory will always be lined.
FIGURES 1B AND 2B:
In the FIG 1B the band (21) will have to be of aluminium and the clip (22) and (14) they will also have to be made of aluminium, the towlines (5) they will have to be made of steel, the screws (18) and (7) of aluminium, the rest of the apparatus can be made of very hard plastic, the elements (19) and (17) they will be rubber soft.
In the FIG 2B the towlines (5) they will be made of steel, the screws (7) of aluminium and the rest of the apparatus can be made of very hard plastic.
FIGURE 3:
It is for further understanding. Leave as the clip it is hooked in the switch (25) of the regulator of gas (24) that is the old regulator of gas but the most used.
We can also see the band deformed for where it leaves the gas (26) and the screw that supports in the gas cylinder (27).
FIGURE 4:
It is for a lot of bigger understanding, and it have not scale. It is the invention installed in a kitchen.
FIGURE 5:
It is for further understanding. Where they go screwed the towlines (5) in the pulleys.
FIGURE 6:
It is the Segurigas being coupled to another more modern gas regulator that the multinational corporation Repsol has taken out.
